# EUROPEAN PATENT SPECIFICATION

(11) **EP 0 748 726 B1**
(45) Date of publication and mention of the grant of the patent: **16.02.2000**
(21) Application number: 96304323.7
(22) Date of filing: 11.06.1996
(51) Int. Cl.: B60R 25/00, B60R 11/02

(54) **Protecting vehicle equipment**
Schutzvorrichtung für Kraftfahrzeugausrüstungen
Dispositif de protection pour des équipements de véhicule

(30) Priority: 12.06.1995 GB 9511894
(43) Date of publication of application: 18.12.1996
(73) Proprietor: FORD MOTOR COMPANY LIMITED, Brentwood Essex (GB); FORD-WERKE AKTIENGESELLSCHAFT, 50735 Köln (DE); FORD FRANCE S. A., 92506 Rueil-Malmaison Cédex (FR)
(72) Inventor: Webster, Pierre, Crouch End, London N8 7RG (GB); Adams, Mark Anthony, Rayleigh, Essex SS6 8BP (GB)
(74) Representative: Messulam, Alec Moses

(56) References cited:
- EP-A- 0 344 524
- DE-U- 9 207 891
- US-A- 3 695 074
- US-A- 4 739 877
- US-A- 5 220 319
- US-A- 5 388 691

## Description

This invention relates to the protection of vehicles and their equipment against theft. In this specification, the term "vehicle equipment" includes complete vehicles as well as parts of vehicles or accessories mounted in vehicles.

In order to prevent theft of vehicles or of vehicle equipment, it is known to provide part of the equipment in removable form so that the vehicle driver can remove the removable part and carry it with him when he is away from the vehicle. In the absence of the removable part, the equipment will not operate.

It is then necessary to store this removable component.

It is known to store vehicle ignition keys on key-fobs, such as described in US patent number 3,695,074. A key-fob may include a button for operating vehicle security equipment, for example as described in US patent number 5,220,319.

According to one aspect of the present invention, there is provided a method of protecting vehicle equipment against theft as specified in Claim 1. Another aspect of the invention provides a key-fob as specified in Claim 4, suitable for use in the method.

The key-fob serves to protect and locate a removable component whilst it is detached from the equipment. In this way, all the items which are needed to operate the vehicle are kept together by the driver when he is away from the vehicle. In a particularly preferred form, the removable component is adapted to be snap fitted onto the fob.

The vehicle equipment component is preferably a part of a vehicle radio or other in-car entertainment system. Alternatively however the vehicle equipment component may be a part of the ignition or other electrical circuit such that in the absence of the removable component, the vehicle cannot be driven.

The invention will now be further described, by way of example, with reference to the accompanying drawings, in which:
Figure 1 is an isometric view of a car radio having a removable component;
Figure 2 is an exploded view of the removable component and front panel of the radio of Figure 1;
Figure 3 is a side view of a key-fob in accordance with one aspect of the present invention having mounted on it the removable component of Figures 1 and 2; and
Figure 4 is an exploded view of the key-fob and removable component of Figure 3.

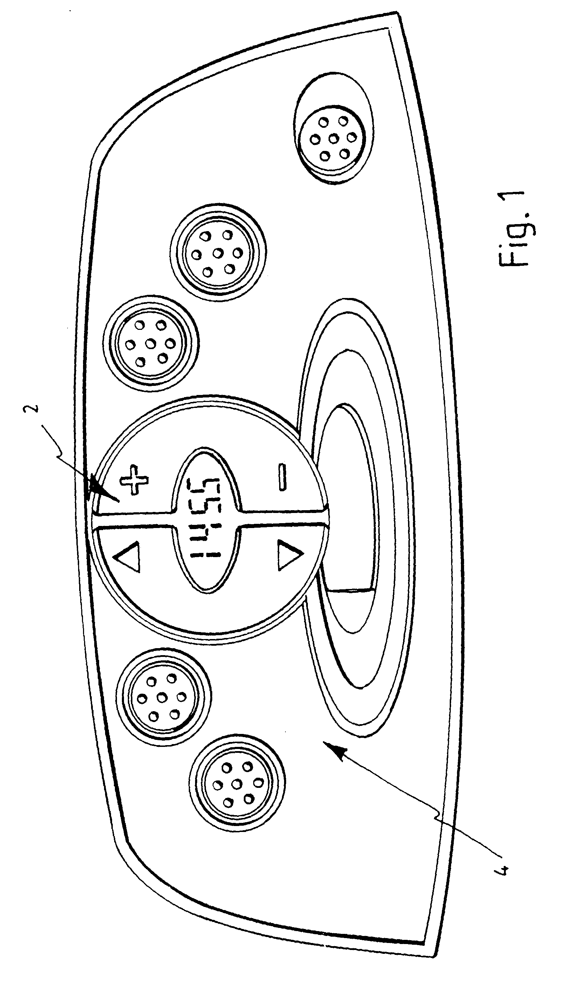

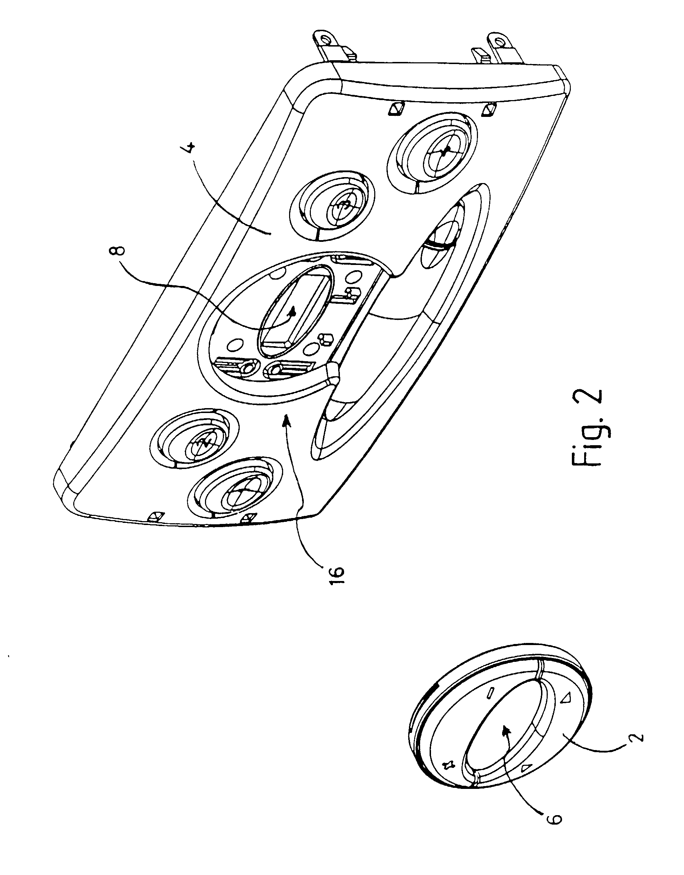

The car radio shown in Figures 1 and 2 is of conventional construction. The front panel 4 of the radio is provided with a removable component 2 in the form of a disc with a hole 6 in its middle. The disc 2 is mountable in a recess 16 of the facia 4 so that the radio display window 8 is visible through the hole 6 in the disc 2.

Operation of the radio is enabled when the disc 2 is mounted in the recess 16, and disabled when the disc 2 is removed. The driver may remove the disc 2 on leaving the car so that the disabled radio is less attractive for a thief to steal.

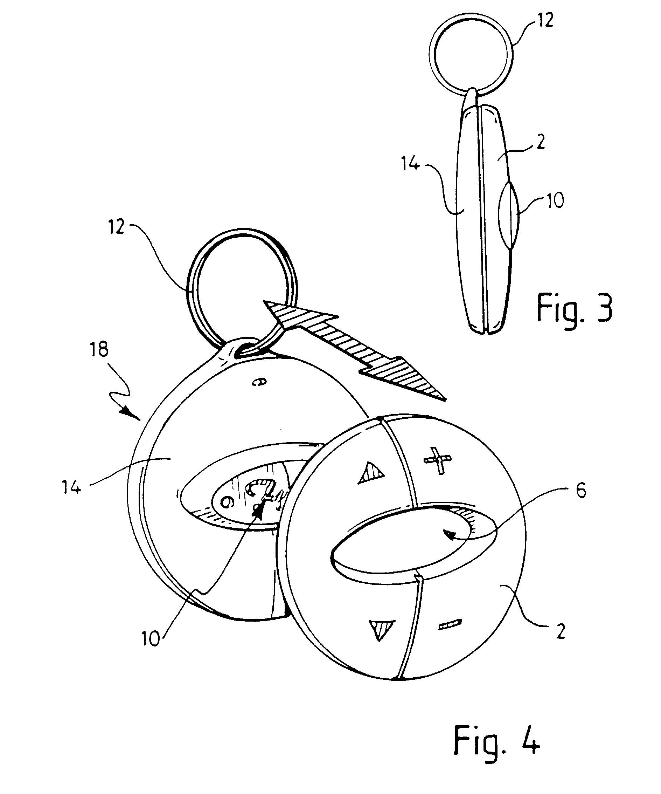

Referring now to Figures 3 and 4, a key-fob 18 according to one aspect of the present invention comprises a body 14 with a key ring 12 for attaching keys thereto. The body 14 has a moulded projection 10 which is shaped so that the disc 2 is a snap fit therefor. The disc 2 may therefore be snapped on to the key-fob 18 so that the car keys and the removable component 2 may be conveniently kept together.

The projection 10 is visible and accessible through the hole 6 in the disc 2, and carries a button for operating a vehicle security device.

The face of the projection 10 may also carry a company or advertising design; for example the Ford Oval device, which is a registered trade mark of Ford Motor Company Limited.

Although the invention has been illustrated with reference to a removable component for a car radio, it is to be understood that the invention is not limited to this embodiment. The removable component may be part of any in-vehicle entertainment system, or of the ignition or other electrical circuit such that in the absence of the component the vehicle cannot be driven.

The invention has for convenience been illustrated with reference to a key-fob to which the removable equipment component may be snap-fitted. However the invention is not limited to this embodiment, and any other suitable means may be provided for releasably mounting the component on the key-fob. For example the key-fob and the removable component may each be provided with interengageable screw threads or any other suitable mounting means well known to those skilled in the art.

## Claims

1. A method of protecting vehicle equipment against theft, wherein the equipment has a removable component (2) which is required to be in place on the equipment to allow the equipment to operate, wherein the equipment is protected against theft by removing the component from the equipment and fitting the component on a key-fob which includes a button for operating a vehicle security device; characterised by providing a hole (6) in the removable component so that the button is accessible through the hole when the component is mounted on the key-fob.

2. A method a claimed in Claim 1, characterised by providing a snap fit so that the removable component is snap fitted to the key-fob.

3. A method as claimed in Claim 1 or Claim 2, characterised by using the removable component as part of an in-car entertainment system.

4. A key-fob comprising a body with means for attaching keys thereto, and an attachment point removably mounting a vehicle equipment component (2) thereon, characterised in that the attachment point includes a button operating a vehicle security device, the button being accessible through a hole in the vehicle equipment component when the component is mounted on the key-fob.

5. A key-fob as claimed in Claim 4, wherein the vehicle equipment component includes a snap-fit on the key-fob.

6. A key-fob as claimed in Claim 4 or Claim 5, wherein the vehicle equipment component is part of an in-car entertainment system.

## Patentansprüche

1. Ein Verfahren zum Schutz einer Fahrzeugausstattung gegen Diebstahl, worin diese Ausstattung ein abnehmbares Bauteil (2) besitzt, welches sich notwendigerweise auf der Ausstattung befinden muß, um einen Betrieb der Ausstattung zu erlauben; worin die Ausstattung durch Entfernen des Bauteils von der Ausstattung, und Anbringen des Bauteils an einem Schlüsselanhänger-welcher einen Knopf zur Bedienung des Fahrzeug-Sicherheitssystems einschließt- gegen Diebstahl geschützt wird; gekennzeichnet durch Bereitstellung eines Lochs (6) in dem abnehmbaren Bauteil, so daß der Knopf durch das Loch zugänglich ist, wenn das Bauteil auf dem Schlüsselanhänger angebracht ist.

2. Ein Verfahren nach Anspruch 1, gekennzeichnet durch Bereitstellung einer Einrasthalterung, so daß das abnehmbare Bauteil einrastend auf dem Schlüsselanhänger aufgesetzt wird.

3. Ein Verfahren nach Anspruch 1 oder Anspruch 2, gekennzeichnet durch Verwendung eines abnehmbaren Bauteiles als Teil eines im Auto befindlichen Unterhaltungssystems.

4. Ein Schlüsselanhänger, der einen Körper mit Vorrichtungen zum Anbringen von Schlüsseln hieran umfaßt; und einen Befestigungspunkt, um hierauf ein Fahrzeug-Ausstattungsbauteil (2) abnehmbar anzubringen; dadurch gekennzeichnet, daß der Befestigungspunkt einen Knopf zur Bedienung einer Fahrzeug-Sicherheitsvorrichtung einschließt, wobei der Knopf durch ein Loch in dem Fahrzeug-Ausstattungsbauteil zugänglich ist, wenn das Bauteil auf dem Schlüsselanhänger angebracht ist.

5. Ein Schlüsselanhänger nach Anspruch 4, worin das Fahrzeug-Ausstattungsbauteil eine Einrasthalterung an dem Schlüsselanhänger einschließt.

6. Ein Schlüsselanhänger nach Anspruch 4 oder Anspruch 5, worin das Fahrzeug-Ausstattungsbauteil Teil eines im Auto befindlichen Unterhaltungssystems ist.

## Revendications

1. Procédé de protection d'un équipement de véhicule contre le vol, dans lequel l'équipement comporte un composant amovible (2) dont il est indispensable qu'il soit en place sur l'équipement pour permettre que l'équipement fonctionne, dans lequel l'équipement est protégé contre le vol en enlevant le composant de l'équipement et en adaptant le composant sur un porte-clés qui comprend un bouton destiné à mettre en fonction un dispositif de sécurité du véhicule, caractérisé par la prévision d'un trou (6) dans le composant amovible de façon que le bouton soit accessible à travers le trou lorsque le composant est monté sur le porte-clés.

2. Procédé selon la revendication 1, caractérisé par la prévision d'un ajustement par pression de façon que le composant soit ajusté par pression sur le porte-clés.

3. Procédé selon la revendication 1 ou la revendication 2, caractérisé par l'utilisation du composant amovible en tant que partie d'un système de distraction à bord du véhicule.

4. Porte-clés comprenant un corps comportant un moyen permettant de fixer des clés à celui-ci, et un point de fixation supportant de façon amovible un composant d'équipement de véhicule (2) sur celui-ci, caractérisé en ce que le point de fixation comprend un bouton mettant en oeuvre un dispositif de sécurité du véhicule, le bouton étant accessible à travers un trou formé dans le composant d'équipement de véhicule lorsque le composant est monté sur le porte-clés.

5. Porte-clés selon la revendication 4, dans lequel le composant d'équipement de véhicule comprend un ajustement par pression sur le porte-clés.

6. Porte-clés selon la revendication 4 ou la revendication 5, dans lequel le composant d'équipement du véhicule fait partie d'un système de distraction à bord du véhicule.
